# EUROPÄISCHE PATENTSCHRIFT

(11) **EP 1 267 101 B1**
(45) Veröffentlichungstag und Bekanntmachung des Hinweises auf die Patenterteilung: **29.07.2009**
(21) Anmeldenummer: 02012601.7
(22) Anmeldetag: 06.06.2002
(51) Int. Cl.: F16H 61/02, F16H 59/48, F16H 59/18

(54) **Verfahren zum Verhindern von Pendelschaltungen bei automatischen Kraftfahrzeug-Getrieben durch geeignete Motormomentenreduzierung**
Method of reducing shift hunting in automatic vehicle transmissions via reduction of motor torque
Procédé anti-pompage pour une transmission automatique d'un véhicule par réduction du couple moteur

(30) Priorität: 15.06.2001 DE 10128878
(43) Veröffentlichungstag der Anmeldung: 18.12.2002
(73) Patentinhaber: ADAM OPEL AG, 65423 Rüsselsheim (DE)
(72) Erfinder: Klösel, Rainer, Dipl.-Ing. (TH), 63225 Langen (DE); Hangen, Götz, Dipl.-Ing. (FH), 55578 Wolfsheim (DE)

(56) Entgegenhaltungen:
- EP-A2- 0 784 170
- DE-A1- 3 830 938
- DE-A1- 4 111 645
- DE-A1- 19 951 107
- US-A- 5 241 476
- US-A- 5 738 605

## Beschreibung

Die Erfindung betrifft ein Verfahren zur Verhinderung von Pendelschaltungen eines Kraftfahrzeug-Automatikgetriebes, das mit einem elektronischen Getriebesteuergerät versehen ist.

Es können sich bei bestimmten Fahrwiderständen (z. B. Bergauffahrt mit Anhänger) Pendelschaltungen dadurch ergeben, dass in einem kleineren Gang bei Volllastfahrt die Beschleunigung immer positiv ist, während im nächst höheren Gang, nach der Schaltung, die Beschleunigung immer negativ ist. Nach einer Schaltung, die ausgeführt werden muß, um das Erreichen der Motorabriegeldrehzahl zu verhindern, fällt infolgedessen die Fahrzeuggeschwindigkeit trotz Volllast wieder ab, bis die Hysterese für Rückschaltungen unterschritten ist.

Aus dem nächstliegenden Stand der Technik Dokument EP 0 784 170 B1 ist ein Verfahren zur Steuerung des Hochschaltvorganges eines Kraftfahrzeug-Automatikgetriebes bekannt. Dieses steuert in Abhängigkeit von Drosselklappenöffnungswinkel und Fahrzeuggeschwindigkeit sowie vermittels abgespeicherter Hochschaltkennlinien bzw. Rückschaltkennlinien ein Hochschalten bzw. Rückschalten. Nach Überschreiten einer Hochschaltkennlinie durch den aktuellen Betriebspunkt vom Getriebesteuergerät vor dem Auslösen eines Hochschaltvorganges wird geprüft, ob nach dem aus aktuellen Werten von Drosselklappenöffnungswinkel, Motordrehzahl, Motordrehmoment, Fahrzeuggeschwindigkeit, Getriebeübersetzung und Wandlerverstärkungsgrad errechneten momentanen Fahrzeugwiderstand eine definierte Mindestbeschleunigung im höheren Gang möglich ist, ohne die Rückschaltkennlinie zu unterschreiten. Bei negativem Prüfergebnis wird der Hochschaltvorgang unterdrückt und bei positivem Prüfergebnis die Hochschaltung ausgeführt. Hierbei ist die definierte Mindestbeschleunigung als eine der Fahrgeschwindigkeit zugeordnete Größe im Steuergerät abgelegt. Weitere Verfahren bzw. Vorrichtungen zur Steuerung eines Gangwechsels eines Kraftfahrzeug-Automatikgetriebes sind aus der DE 196 00 914 A1, DE 41 11 645 A1 und DE 38 30 938 C2 bekannt.

Es ist Aufgabe der vorliegenden Erfindung ein anderes, besonders einfaches Verfahren zur Verhinderung von Pendelschaltungen bei Kraftfahrzeug-Automatikgetrieben anzugeben.

Das erfindungsgemäße Verfahren zur Verhinderung von Pendelschaltungen des Kraftfahrzeug-Automatikgetriebes mit elektronischem Getriebesteuergerät weist folgende Merkmale auf:
- das Getriebesteuergerät überwacht den aktuellen Fahrwiderstand aus dem Vergleich von gemessener Fahrzeugbeschleunigung aᵢₛₜ zu einer theoretischen Fahrzeugbeschleunigung aₜₕₑₒᵣ und ermittelt daraus den Wert einer Differenzbeschleunigung a_{diff}
- das Motormoment wird abgeregelt wenn
   a. die Stellung des Fahrpedales des Kraftfahrzeuges größer ist als ein Grenzwert,
   b. die Differenzbeschleunigung a_{diff} größer ist als ein Grenzwert,
   c. die gemessene Fahrzeugbeschleunigung aᵢₛₜ größer ist als ein positiver Grenzwert,
   d. die theoretische Fahrzeugbeschleunigung aₜₕₑₒᵣ im nächst höheren Gang kleiner ist als ein Grenzwert,
   e. die aktuelle Motordrehzahl größer ist als ein Grenzwert.

Das Getriebesteuergerät überwacht damit den aktuellen Fahrwiderstand aus dem Vergleich von gemessener Fahrzeugbeschleunigung aᵢₛₜ zur theoretischen, vorzugsweise aus dem Motormoment zurückgerechneten Fahrzeugbeschleunigung für die Ebene, und ermittelt daraus den Wert der Differenzbeschleunigung a_{diff}. a_{diff} kann sowohl positiv (im Sinne eines großen Fahrwiderstandes, z.B. bei Bergauffahrt) als auch negativ (im Sinne eines kleinen Fahrwiderstandes, z. B. bei Bergabfahrt) sein. Sind die vorstehend unter a. bis e. genannten Bedingungen erfüllt, erfolgt ein Abregeln, insbesondere ein sanftes Abregeln des Motormomentes. Die Folge ist, dass keine weitere Fahrzeugbeschleunigung mehr auftritt und auch die Situation nicht eintritt, dass das Getriebe zwangsläufig hochschaltet. Es findet vielmehr aufgrund des sanften Abregelns des Motormomentes eine konstante Fahrt mit Volllast statt, die durch eine Drehzahlregelung ermöglicht wird. Der besondere Vorteil bei dem erfindungsgemäßen Verfahren ist somit darin zu sehen, dass statt einer Fahrzeugbeschleunigung, die zum zwangsläufigen Hochschalten des Getriebes führen würde, ein Abregeln, insbesondere sanftes Abregeln des Motormomentes stattfindet. Pendelschaltungen können so bei bestimmten Fahrwiderständen vermieden werden.

Das Abregeln des Motors auf eine konstante Drehzahl beinhaltet den weiteren Vorteil, dass die thermische Belastung des Motors geringer ist.

Die einzelnen Größen für die vorstehenden Bedingungen gemäß den Buchstaben a. bis e. sind im Wesentlichen im Einzelfall zu bestimmen. So kann die Bedingung a. beispielsweise als erfüllt angesehen werden, wenn der Winkel des Fahrpedals etwa einen Wert von 80% seines Maximalstellwinkels erreicht hat. Der zur Bedingung a. genannte Grenzwert würde somit bei etwa 80% liegen. Die Kennwerte der Beschleunigungen lassen sich nicht pauschal angeben, sondern hängen beispielsweise von der Motorisierung, der Last, dem Geschwindigkeitsbereich ab. In aller Regel werden die Grenzwerte, die mit den Beschleunigungen in Bezug zu setzen sind, durch Kennlinien wiedergegeben. Die Bedingung e. kann beispielsweise dann als erfüllt angesehen werden, wenn die aktuelle Motordrehzahl größer ist als ein Grenzwert, der beispielsweise 70% der Abregeldrehzahl des Motors beträgt.

## Patentansprüche

1. Verfahren zum Verhindern von Pendelschaltungen eines Kraftfahrzeug-Automatikgetriebes mit elektronischem Getriebesteuergerät, mit folgenden Merkmalen:
- das Getriebesteuergerät überwacht den aktuellen Fahrwiderstand aus dem Vergleich von gemessener Fahrzeugbeschleunigung (aᵢₛₜ) zu einer theoretischen Fahrzeugbeschleunigung (aₜₕₑₒᵣ) und ermittelt daraus den Wert der Differenzbeschleunigung (a_{diff}),
- das Motormoment wird abgeregelt, wenn
a. die Stellung des Fahrpedals des Kraftfahrzeuges größer ist als ein Grenzwert,
b. die Differenzbeschleunigung (a_{diff}) größer ist als ein Grenzwert,
c. die gemessene Fahrzeugbeschleunigung (aᵢₛₜ) größer ist als ein positiver Grenzwert,
d. die theoretische Fahrzeugbeschleunigung (aₜₕₑₒᵣ) im nächst höheren Gang kleiner ist als ein Grenzwert,
e. die aktuelle Motordrehzahl größer ist als ein Grenzwert.

2. Verfahren nach Anspruch 1, wobei die theoretische Fahrzeugbeschleunigung (aₜₕₑₒᵣ) die aus dem Motormoment zurückgerechnete Fahrzeugbeschleunigung für die Ebene darstellt.

## Claims

1. A method of preventing shift hunting of automatic vehicle transmissions with an electronic transmission control device, comprising the following features:
- the transmission control device monitors the current vehicle resistance from the comparison of measured vehicle acceleration (a_{curr}) with a theoretical vehicle acceleration (aₜₕₑₒᵣ) and determines therefrom the value of differential acceleration (a_{diff});
- the engine torque is reduced when
a) the position of the accelerator of the motor vehicle is higher than a threshold value;
b) the differential acceleration (a_{diff}) is larger than a threshold value;
c) the measured vehicle acceleration (a_{curr}) is larger than a positive threshold value;
d) the theoretical vehicle acceleration (aₜₕₑₒᵣ) in the next higher gear is lower than a threshold value;
e) the current engine speed is higher than a threshold value.

2. A method according to claim 1, wherein the theoretical vehicle acceleration (aₜₕₑₒᵣ) represents the vehicle acceleration for the plane as calculated back from the engine torque.

## Revendications

1. Procédé pour empêcher les changements de rapports oscillants d'une boîte de vitesses automatique de véhicule avec une unité de commande de boîte de vitesses électronique, comportant les caractéristiques suivantes :
- l'unité de commande de boîte de vitesses surveille la résistance actuelle à l'avancement à partir de la comparaison de l'accélération mesurée du véhicule (a_{réelle}) et d'une accélération théorique du véhicule (a_{théor}) et détermine à partir de là l'accélération différentielle (a_{diff}) ,
- le couple du moteur est réduit si
a. la position de la pédale de conduite du véhicule dépasse une valeur limite,
b. l'accélération différentielle (a_{diff}) dépasse une valeur limite,
c. l'accélération mesurée du véhicule (a_{réelle}) dépasse une valeur limite positive,
d. l'accélération théorique du véhicule (a_{théor}) au rapport immédiatement supérieur est plus petite qu'une valeur limite,
e. la vitesse de rotation actuelle du moteur dépasse à une valeur limite.

2. Procédé selon la revendication 1, dans lequel l'accélération théorique du véhicule (a_{théor}) représente l'accélération du véhicule recalculée à partir du couple du moteur pour un terrain plat.
